# EUROPEAN PATENT SPECIFICATION

(11) **EP 2 117 095 B1**
(45) Date of publication and mention of the grant of the patent: **16.07.2014**
(21) Application number: 08464007.7
(22) Date of filing: 06.05.2008
(51) Int. Cl.: H02H 5/08

(54) **Moisture protection circuit**
Feuchtigkeitsschutzschaltung
Circuit de protection contre l'humidité

(43) Date of publication of application: 11.11.2009
(73) Proprietor: Continental Automotive GmbH, 30165 Hannover (DE)
(72) Inventor: Ipatiov, Alexandru, 725400 Radauti (RO)

(56) References cited:
- EP-A- 0 144 660
- WO-A-2005/074088
- DE-A1- 10 062 280

## Description

The invention relates to the protection of security related electronic systems against ingress of liquids or moisture.

Most safety related electronic systems are provided with certain means for enabling plausibility or validity checks, verifying input, intermediate, or output signals or values, or providing redundant processing. For controlling a safety relevant actuator, often two complementary controls are used as a preventive measure against a malfunction due to a single failure. Although these measures provide a certain degree of operational reliability, they are not appropriate to handle a common cause failure affecting the whole security related system, like for instance faulty control signals delivered to an actuator by an ingress of water or other liquid into an electronic control system.

Patent application EP 0 144 660 A1 discloses a protection circuit for electrical appliances which turns off the power supply to the appliance upon ingress of a liquid. The circuit uses a liquid sensor which first terminal is connected to a potential of the power supply and which second terminal is connected to a control terminal of a voltage controllable switching component. Upon ingress of water, the resistance between the two terminals of the liquid sensor decreases, resulting in a forwarding of the power supply potential to the control terminal of the voltage controlled switching component, which switches the component into the "On" state. The current passing through the voltage controllable switching component in the "On" state cuts out a fusible wire, which in turn results in an opening of switches located within the power supply input lines.

German patent application DE 100 62 280 A1 discloses a protection circuit for an electrical and/or electronic control circuit of an electrical appliance, whereby the protection circuit comprises a liquid sensitive element adapted to vary the resistance between its terminals upon ingress of water and a switching means for releasing an internal or an external fuse. By releasing the fuse, the control circuit is separated from the power supply.

Both water ingress safeguarding systems are designed to separate the protected circuit from its power supply when exposed to a liquid.

It is therefore an object of the present invention, to provide safeguarding equipment preventing security related electronic systems from malfunctioning upon ingress of liquids or moisture.

The above object is achieved by the invention as defined in the independent claims.

The invention comprises a safeguarding circuit having a liquid sensitive element and a voltage controllable switching component, the liquid sensitive element comprising a first terminal being connected to a predetermined electrical potential and a second terminal being connected to a control terminal of the voltage controllable switching component, and the liquid sensitive element being adapted to change the resistance between the first terminal and the second terminal upon being in contact with a liquid or with a humid atmosphere.
It should be noted in this context that the terms "comprise", "include", "having", and "with", as well as grammatical modifications thereof used in this specification or the claims, indicate the presence of technical features like stated components, figures, integers steps or the like, and do by no means preclude a presence or addition of one or more other features, particularly other components, integers, steps or groups thereof.

The invention further comprises a liquid sensitive element comprising a first electrically conductive trace and a second electrically conductive trace located alongside the first conductive trace, with the first and the second conductive trace being separated by an intermediate electrically non-conductive surface.

The invention advantageously provides a protection circuit and device enabling an unimpeded operation of a security related system while protecting it from any malfunction upon ingress of moisture or liquid.

Advantageous embodiments of the present invention are the subject of other claims.

A reliable safeguard circuitry is achieved with a MOSFET forming the voltage controllable switching component, whereby the gate of the MOSFET forms the control terminal of the voltage controllable switching component, and wherein the first terminal of the liquid sensitive element is connected to a potential of a power supply. The MOSFET may either be a n-channel or p-channel MOSFET of the enhancement or depletion type.

For securely disconnecting a power supply voltage upon ingress of a liquid or moisture, an overcurrent releasing element is preferably connected between a potential of the power supply and a protected circuit or device, with the voltage controllable switching component being connected between the other potential of the power supply and the connection between the overcurrent releasing element and the protected circuit or device. For providing a defined potential to the protected circuit, the voltage controllable switching component is connected between the protected circuit or device and a reference potential.

A defined potential drop across the surface of the liquid sensitive element being exposed to moisture and other liquids is achieved by the liquid sensitive element further comprising one or more further electrically conductive traces being located between the first electrically conductive trace and the second electrically conductive trace and each being separated from an adjacent electrically conductive trace by an intermediate electrically non-conductive surface.

For adapting the response time of the liquid sensitive element to the requirements of the protected circuit or device, the electrically conductive traces are preferably in contact with a cover formed of a porous material.

Further features of the invention will be apparent from the description of embodiments of the invention together with the claims and the attached figures. Embodiments of the invention may implement single features or several features in combination. In the following description, the present invention is explained in more detail with respect to special embodiments and in relation to the enclosed drawings, in which
- Figure 1a: shows a block diagram of a first and second embodiment of a security related system safeguarded against malfunction upon ingress of liquids and moisture,
- Figure 1b: shows a block diagram of a third and fourth embodiment of a security related system safeguarded against malfunction upon ingress of liquids and moisture,
- Figure 2b: shows a circuit diagram of a safeguard equipment according to a first embodiment,

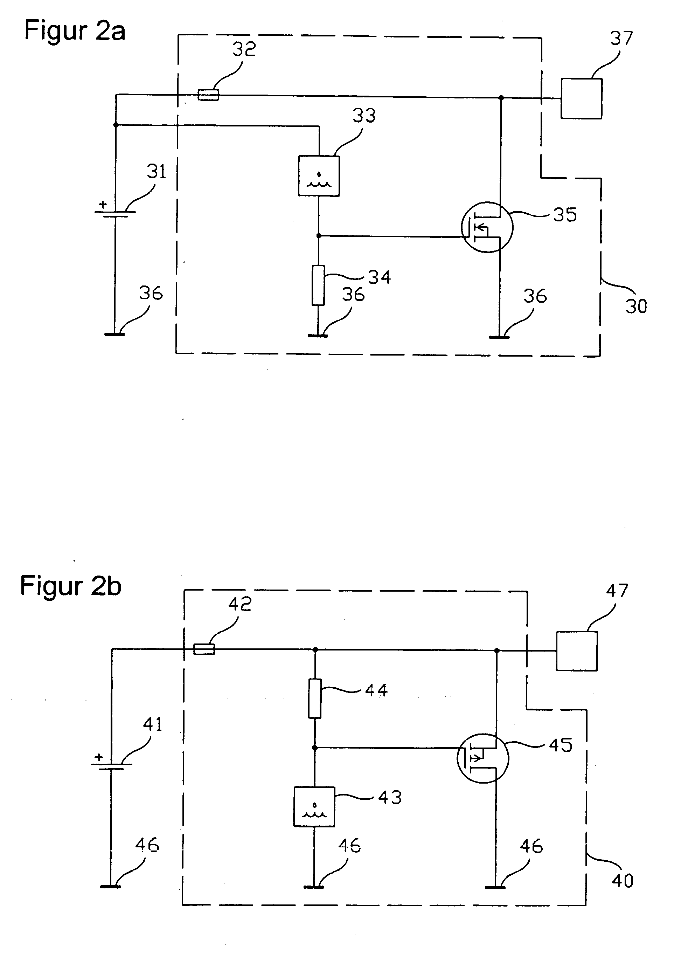

- Figure 2a: shows a circuit diagram of a safeguard equipment according to a second embodiment,

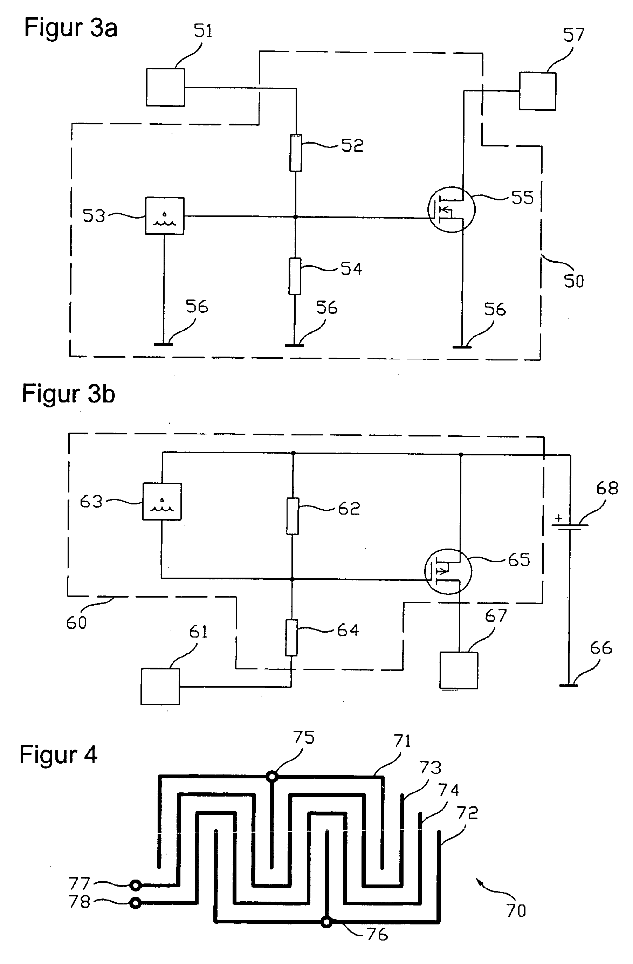

- Figure 3a: shows a circuit diagram of a safeguard equipment according to a third embodiment,
- Figure 3b: shows a circuit diagram of a safeguard equipment according to a fourth embodiment, and
- Figure 4: shows a conductive trace layout for an embodiment of a liquid and moisture sensor.

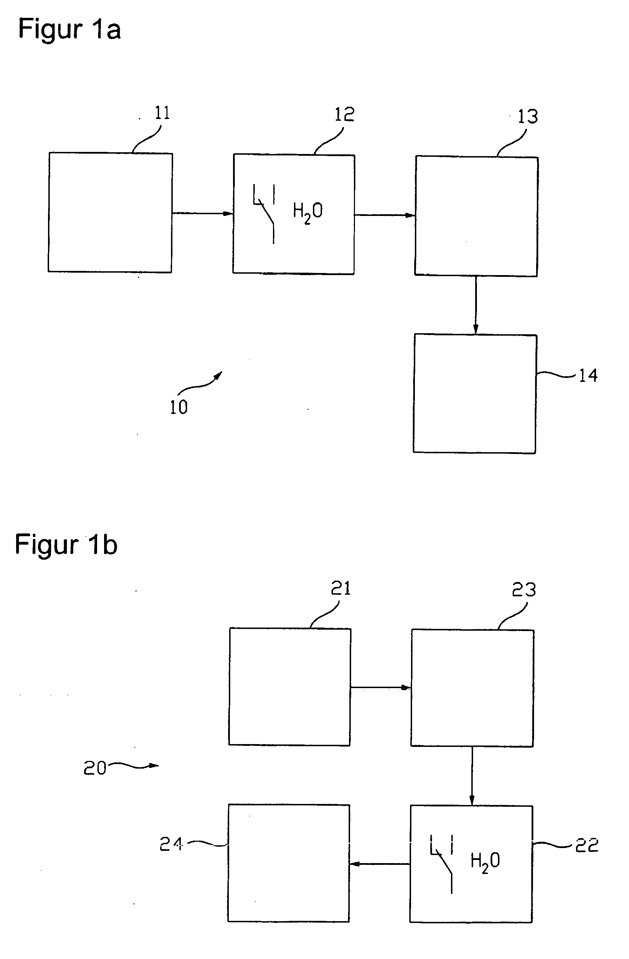

The block diagram 10 of Figure 1a illustrates a block diagram of a first and second embodiment of a security related system safeguarded against malfunction upon ingress of liquids and moisture. The exemplary security related system shown which is to be protected against malfunctioning, comprises a command circuit 13 controlling a further circuit or device 14. Such systems are common e.g. in automotive applications, where electronic control units are used for actuating electromechanical devices or further electronic circuits. Notwithstanding the distributed form shown in Figure 1a, the security related system may also be formed by just one component to be safeguarded, like for instance by only one electric or electronic circuit or by only one electromechanic device.

In the embodiment illustrated in Figure 1a, a moisture and liquid safeguarding equipment 12 is used to control the supply of power to the protected circuit 13. The safeguarding equipment 12 is adapted to interrupt the power supply line to the protected circuit 13 upon ingress of a liquid like for instance water, oil, or the like more. If the controlled circuit or device 14 is also connected to the power supply 11, the system shown in Figure 1a may be modified to also interrupt the supply of power to component 14. The safeguarding equipment 12 does not only interrupt the power supply to the security related system, but switches the voltage or current supply input of component 13, and if required also that for component 14, to a safeguard potential, like for instance ground potential.

The block diagram of a third and fourth embodiment of a security related system safeguarded against malfunctioning upon ingress of liquids and moisture is illustrated in the block diagram 20 of Figure 1b. It differs from the first embodiment shown in Figure 1a in that the moisture and liquid safeguarding equipment 22 is located between the command circuit 23 of the security sensitive system and the controlled circuit 24 or device 24 of the security sensitive system. Instead of disconnecting the power supply to one or more components 23 and 24, respectively, the command signal supplied to the controlled circuit 24 or device 24 is set to a safe value upon ingress of liquid or moisture. A respective overwriting of a possibly erroneous command signal delivered by a command circuit 23 allows to continue the operation of other systems controlled by circuit 23, which are not security sensitive.

Figure 2a shows a first embodiment 30 of a safeguarding equipment 12. The safeguarding equipment is located in the electrical connection between the power supply 31 and the protected circuit 37, which corresponds to a security related system as e.g. illustrated in Figure 1a by components 13 and 14. The safeguarding equipment 30 comprises a switching component 35 located between two lines, each of which is connected to one of the two potentials provided by power supply 31. The switching component is formed by a voltage controllable device, like for instance by an electromechanic relay or by a semiconductor switching element, e.g. a transistor or thyristor or the like. In the embodiment shown in Figure 2a, the voltage controllable switching component is formed by an n-channel enhancement MOSFET (metal-oxide-semiconductor field-effect transistor) device, enabling an on-state, i.e. a state characterised by the existence of a low resistance channel between source and drain of the transistor, when the positive voltage supplied to its gate exceeds a threshold value. Source and drain contacts of transistor 35 are connected between the power lines connecting the power source 31 to the protected circuit 37. The gate of the MOSFET 35 is connected to the negative ground potential 36 of the power supply 31 via resistor 34. The gate is further connected to a moisture and liquid detector 33, which other terminal is connected to the positive potential of the power supply 31. An overcurrent releasing element 32 is placed in the line connecting the positive potential output terminal of the power supply 31 with the input terminal for the positive potential of the supply power of protected circuit 37 such, that the line is interrupted upon the current load on this line exceeding a certain value. The overcurrent releasing element 32 may be implemented as a simple fuse like indicated in Figure 2a, or any other suitable electric or electronic device, like for instance a circuit breaker or the like.

The moisture and liquid detector 33 comprises a liquid sensitive element, which lowers its resistance upon moisture or water ingress, the liquid sensitive element is placed between the terminals of the moisture and liquid detector 33, thus forming an element with a liquid or moisture dependent resistance. With liquid or moisture entering the liquid detector 33, the gate potential of the n-channel enhancement type MOSFET 35 is raised according to the corresponding current resistance relation between the moisture and liquid detector 33 and resistor 34. Upon raising the gate potential above the threshold value, MOSFET 35 changes into the on-state, thereby forming a short circuit between the two power supply lines.

The short circuit results in the power supply delivering a very high supply current that causes the overcurrent releasing element 32 to interrupt the power line.

In the embodiment shown in Figure 2a, the moisture and liquid detector 33 is connected to the line between the overcurrent releasing element 32 and the power supply 31, so that the gate of the MOSFET remains on a positive potential even after the overcurrent releasing element 32 has interrupted the power line. Accordingly, the MOSFET remains in the on-state and connects the positive power potential input terminal of the protected circuit 37 with ground potential, thereby safeguarding it from possible parasitic influences.

A second exemplary embodiment of a safeguarding equipment 12 is shown in Figure 2b. The basic difference with respect to the embodiment of Figure 2a is to be seen in the use of a p-channel enhancement MOSFET 45 for the voltage controllable switching component. The p-channel MOSFET 45 changes into the on-state by its gate potential being lowered below a certain threshold value. Like before, the gate potential changes upon liquid or moisture entering the moisture and liquid detector 43 thus lowering the resistance of the liquid sensitive element connected between the detector's terminals. As soon as the gate voltage defined by the resistance relation between the liquid sensitive element of the moisture and liquid detector 43 and resistor 44 drops below the threshold voltage, MOSFET 45 changes into the on-state to form a short circuit between the lines from the power supply near the input to the protected circuit 47. This causes the fuse 42 to blow thereby interrupting the power voltage supply. In the example shown, the fuse is located in the power line between power supply 41 and resistor 44. Upon interrupting the power line, no current is supplied to the potential divider formed by resistor 44 together with moisture and liquid detector 43. This results in the gate potential being lowered to ground potential 46 and thus ensures the on-state of MOSFET 45. The input voltage between the power supply terminals of the protected circuit is thus tied to a defined potential (in the example shown to zero potential), which safeguards the power input terminals from parasitic influences.

An exemplary embodiment 50 of a safeguarding equipment 22 is shown in Figure 3a. This safeguarding equipment 50 is placed between a command circuit 51 (corresponding to command circuit 23 of Figure 1b) and a protected circuit or device 57 (corresponding to controlled circuit or device 24 of Figure 1b). The safeguarding equipment 50 is formed by a voltage controlled switching component 55, with the potential of its voltage control terminal being adjusted by a voltage divider formed by resistors 52 and 54 in combination with the moisture and liquid detector 53 shunting resistor 54. Resistors 52 and 54 are connected in series between an output terminal of the command circuit 51 and ground potential 56. Upon liquid or moisture entering the moisture and liquid detector 53, the resistance of the detectors liquid sensitive element decreases. This results in a lowering of the potential at the interconnection of the two resistors 52 and 54, causing the gate potential to drop to a value closer to ground potential. This in return causes the MOSFET 55 to change into the off-state, thereby connecting the respective port of the protected circuit or device to a defined potential, in the illustrated case to ground potential, via a high impedance path. This input potential is then used to overwrite a possibly erroneous command signal delivered from the command circuit 51 due to ingress of a liquid or moisture.

The embodiment shown in Figure 3b corresponds to that of Figure 3a with the exemption that the moisture and liquid detector 63 shunts resistor 62 connected between the control voltage terminal of MOSFET 65 and the positive power supply 68 potential, which is due to the use of a p-channel enhancement type MOSFET instead of a n-channel enhancement type MOSFET as in the example of Figure 3a. Apart from this differences, which result in the gate of the MOSFET being raised to a higher potential upon the ingress of a liquid or moisture, the operation of this fourth embodiment of a safeguarding equipment equals that explained with respect to Figure 3a.

Figure 4 shows a preferred implementation 70 of a liquid sensitive element for a moisture and liquid detector used in the above explained safeguarding circuitries. The liquid sensitive element 70 is formed of a distributed electrically conductive trace network, with the traces formed on an electrically non conducting substrate like e.g. epoxy-glass, ceramic or polyimide films. In the example shown in Figure 4, the liquid sensitive element 70 is formed with four interdigitated traces 71, 72, 73, and 74. The pitch between two adjacent traces is constant. The outer traces 71 and 72 each have a terminal 75 and 76, respectively, allowing the sensitive element being connected to the terminals of a moisture and liquid detector used in one of the circuitries explained above. Also each of the intermediate traces 73 and 74 located between the outer traces 71 and 72 may respectively be equipped with a terminal 77 and 78. This terminals may be connected to intermediate potentials for linearising the voltage drop across the traces. The intermediate potentials may be provided by a (not shown) high-impedance resistor voltage divider connected to the terminals 75, 77, 78, and 76. The resistance of the substrate surface is reduced by the substrate being wetted by moisture or liquid with the resulting surface leakage current lowering the potential difference between terminals 75 and 76.

The sensitivity and the voltage range of the liquid sensitive element 70 can be adapted to the particular requirements of a particular safeguarding equipment for which the element 70 is to be used, by varying the number of traces, their pitch and geometry. The response time of the liquid sensitive element 70 can be reduced by covering the element's surface with a porous material. Selection of material and structure of the porous cover allows to adapt the response to the requirements of the safeguarded system within a wide range.

While the invention has been described with respect to certain specific embodiments, it is evident that many alternatives, modifications and variations will be apparent to those skilled in the art. In particular other forms of liquid sensitive elements may be used like e.g. conventional humidity sensors or PTC's. It is also obvious to those skilled in the art to introduce a further switching element in the embodiments illustrated in Figures 3a and 3b enabling an interruption of a connection between the output terminal of the command circuit and the input terminal of the protected circuit upon the voltage controllable switching component being set in the on-state. Accordingly, the preferred embodiments of the invention set forth herein are intended to be illustrative and not limiting in any way. Various changes may be made without departing from the spirit and scope of the present invention as defined in the following claims.

## Claims

1. Safeguarding circuit comprising a liquid sensitive element (33, 43, 53, 63, 70) and a voltage controllable switching component (35, 45, 55, 65), whereby
- the voltage controllable switching component comprises a first switching terminal connected to the line adapted for connecting the protected circuit or device (37, 47, 57, 67), a second switching terminal being in electrical contact with a first predetermined electrical potential (36, 46, 56, 68), and a control terminal, and whereby the voltage controllable switching component is adapted to vary the electrical resistance between the first switching terminal and the second switching terminal depending on a potential applied to the control terminal, and
- the liquid sensitive element (33, 43, 53, 63, 70) comprises a first terminal (75) and a second terminal (76), and whereby the liquid sensitive element (33, 43, 53, 63, 70) is adapted to lower the electrical resistance between the first terminal (75) and the second terminal (76) upon being in contact with a liquid or with a humid atmosphere, **characterised in that**,
the first terminal (75) is directly connected to a second predetermined electrical potential (31, 46, 56, 68) and the second terminal (76) is directly connected to the control terminal of the voltage controllable switching component (35, 45, 55, 65).

2. Safeguarding circuit according to claim 2, wherein an overcurrent releasing element (32, 42) is arranged within a line adapted to forward a potential (31, 41) provided by a power supply (11, 21) to the protected circuit or device (37, 47, 57, 67), and in between the power supply connection and the connection to the first switching terminal.

3. Safeguarding circuit according to claim 1 or 2, wherein both the first predetermined electrical potential and the second predetermined potential correspond to a first potential (46, 56, 68) provided by a power supply.

4. Safeguarding circuit according to claim 1 or 2, wherein the first predetermined electrical potential corresponds to a first potential (36) of a power supply and the second predetermined potential corresponds to a second potential (31) of the power supply.

5. Safeguarding circuit according to one of the preceding claims, wherein a MOSFET (35, 45) forms the voltage controllable switching component and the gate of the MOSFET forms the control terminal of the voltage controllable switching component.

## Patentansprüche

1. Absicherung einer Schaltung, die ein empfindliches Flüssigkeitselement (33, 43, 53, 63, 70) und eine spannungssteuerbare Schaltungskomponente (35, 45, 55, 65) aufweist, wobei
- die spannungssteuerbare Schaltungskomponente einen ersten Schaltanschluss, der mit der Leitung verbunden ist, die dafür ausgelegt ist, die geschützte Schaltung oder Vorrichtung (37, 47, 57, 67) zu verbinden, einen zweiten Schaltanschluss, der in einem elektrischen Kontakt mit einem ersten vorgegebenen elektrischen Potential (36, 46, 56, 68) steht, und einen Steueranschluss aufweist, und wobei die spannungssteuerbare Schaltungskomponente dafür ausgelegt ist, in Abhängigkeit von einem Potential, das an den Steueranschluss angelegt ist, den elektrischen Widerstand zwischen dem ersten Schaltanschluss und dem zweiten Schaltanschluss zu variieren, und
- das empfindliche Flüssigkeitselement (33, 43, 53, 63, 70) einen ersten Anschluss (75) und einen zweiten Anschluss (76) aufweist und wobei das empfindliche Flüssigkeitselement (33, 43, 53, 63, 70) dafür ausgelegt ist, bei einem Kontakt mit einer Flüssigkeit oder mit einer feuchten Atmosphäre den elektrischen Widerstand zwischen dem ersten Anschluss (75) und dem zweiten Anschluss (76) zu senken,
**dadurch gekennzeichnet, dass**
der erste Anschluss (75) direkt mit einem zweiten vorgegebenen elektrischen Potential (31, 46, 56, 68) verbunden ist und dass der zweite Anschluss (76) direkt mit dem Steueranschluss der spannungssteuerbaren Schaltungskomponente (35, 45, 55, 65) verbunden ist.

2. Absicherung einer Schaltung nach Anspruch 1, wobei ein Überstromauslöseelement (32, 42) innerhalb einer Leitung, die dafür ausgelegt ist, ein Potential (31, 41), das von einer Leistungsquelle (11, 21) bereitgestellt wird, zu der geschützten Schaltung oder Vorrichtung (37, 47, 57, 67) zu versenden, und zwischen der Leistungsquellenverbindung und der Verbindung des ersten Schaltanschlusses angeordnet ist.

3. Absicherung einer Schaltung nach Anspruch 1 oder 2, wobei sowohl das erste vorgegebene elektrische Potential als auch das zweite vorgegebene Potential einem ersten Potential (46, 56, 68) entsprechen, das von einer Leistungsquelle bereitgestellt wird.

4. Absicherung einer Schaltung nach Anspruch 1 oder 2, wobei das erste vorgegebene elektrische Potential einem ersten Potential (36) einer Leistungsquelle entspricht, und das zweite vorgegebene Potential einem zweiten Potential (31) der Leistungsquelle entspricht.

5. Absicherung einer Schaltung nach einem der vorhergehenden Ansprüche, wobei ein MOSFET (35, 45) die spannungssteuerbare Schaltungskomponente bildet und das Gate des MOSFET den Steueranschluss der spannungssteuerbaren Schaltungskomponente bildet.

## Revendications

1. Circuit de protection comprenant un élément sensible aux liquides (33, 43, 53, 63, 70) et un composant de commutation pouvant être commandé par tension (35, 45, 55, 65), dans lequel
- le composant de commutation pouvant être commandé par tension comprend une première borne de commutation connectée à la ligne adaptée pour connecter le circuit ou le dispositif protégé (37, 47, 57, 67), une deuxième borne de commutation étant en contact électrique avec un premier potentiel électrique prédéterminé (36, 46, 56, 68), et une borne de commande, et dans lequel le composant de commutation pouvant être commandé par tension est adapté de façon à varier la résistance électrique entre la première borne de commutation et la deuxième borne de commutation selon un potentiel appliqué sur la borne de commande, et
- l'élément sensible à liquide (33, 43, 53, 63, 70) comprend une première borne (75) et une deuxième borne (76), et dans lequel l'élément sensible à liquide (33, 43, 53, 63, 70) est adapté de façon à abaisser la résistance électrique entre la première borne (75) et la deuxième borne (76) lorsqu'il est en contact avec un liquide ou avec une atmosphère humide,
**caractérisé en ce que**
la première borne (75) est connectée directement à un deuxième potentiel électrique prédéterminé (31, 46, 56, 68) et la deuxième borne (76) est connectée directement à la borne de commande du composant de commutation pouvant être commandé par tension (35, 45, 55, 65).

2. Circuit de protection selon la revendication 1, dans lequel un élément à déclenchement par surintensité (32, 42) est disposé à l'intérieur d'une ligne adaptée de façon à transmettre un potentiel (31, 41) fourni par une alimentation électrique (11, 21) au circuit ou au dispositif protégé (37, 47, 57, 67) et entre la connexion de l'alimentation et la connexion à la première borne de commutation.

3. Circuit de protection selon la revendication 1 ou 2, dans lequel le premier potentiel électrique prédéterminé et le deuxième potentiel électrique prédéterminé correspondent à un premier potentiel (46, 36, 68) fourni par une alimentation électrique.

4. Circuit de protection selon la revendication 1 ou 2, dans lequel le premier potentiel électrique prédéterminé correspond à un premier potentiel (36) d'une alimentation électrique et le deuxième potentiel prédéterminé correspond à un deuxième potentiel (31) de l'alimentation électrique.

5. Circuit de protection selon l'une quelconque des revendications précédentes, dans lequel un MOSFET (35, 45) forme le composant de commutation pouvant être commandé par tension et la grille de ce MOSFET forme la borne de commande du composant de commutation pouvant être commandé par tension.
